# EUROPEAN PATENT APPLICATION

(11) **EP 2 790 353 A1**
(43) Date of publication of application: **15.10.2014**
(21) Application number: 13163315.8
(22) Date of filing: 11.04.2013
(51) Int. Cl.: H04L 12/10, H04L 12/40, G06F 13/38, G06F 13/42, G06F 1/26

(54) **Switching Device**

(71) Applicant: Tsai, Hung Chou, Taipei City (TW)
(72) Inventor: Tsai, Hung Chou, Taipei City (TW)
(74) Representative: Anohins, Vladimirs

(57) **Abstract**

Provided is a switching device (10) for use with electronic apparatuses (2,4) and for use in transmitting data and power therebetween automatically or manually. The switching device (10) includes a first transmission module (12), voltage dividing unit (14), second transmission module (16), switching module (18), hub module (20), expansion unit (22), and switching units. The switching device (10) switches automatically between a plurality of path configurations formed from the switching module (18) and the hub module (20) according to a voltage change generated because of connection of the first transmission module (12) and the electronic apparatuses (2,4), such that the electronic apparatuses (2,4) can transmit data and power through the path configurations. Alternatively, the switching units change one of the path configurations manually to allow the electronic apparatuses (2,4) to transmit data and power through one of the path configurations.

## Description

### FIELD OF THE INVENTION

The present invention relates to switching devices, and more particularly, to a switching device for use with a plurality of electronic apparatuses characterized by a master-slave architecture and for use in configuring the electronic apparatuses as either a master or a slave for transmitting data and transmitting power.

### BACKGROUND OF THE INVENTION

Due to technological advancements, electronic product consumers nowadays are usually in possession of a variety of electronic apparatuses, such as smart mobile phones or tablet computers. The users have to perform data transmission between the electronic apparatuses in order to meet the need of sharing data between the electronic apparatuses. Examples of the data include pictures, text, music, and video.

In addition, the users can also undertake data transmission with a communication module disposed in an electronic apparatus. The communication module enables the data to be applied to wired communication or wireless communication.

However, conventional transmission cables are equipped with a switch whereby the users switch between the conventional transmission cables in accordance with the type (that is, master versus slave) of the electronic apparatuses in order to carry out data transmission.

In the situation where an electronic apparatus is configured as a master, it indicates that the electronic apparatus transmits data during the data transmission process. In the situation where an electronic apparatus is configured as a slave, it indicates that the electronic apparatus receives data during the data transmission process.

Data transmission can be correctly carried out, provided that users have to judge the master-slave architecture of the electronic apparatus and perform a switching process with a switch.

Accordingly, it is imperative to provide a switching device for overcoming the aforesaid drawbacks of the prior art.

### SUMMARY OF THE INVENTION

It is an objective of the present invention to provide a switching device for use with a plurality of electronic apparatuses having a master-slave architecture and for use in switching a path configuration between the electronic apparatuses automatically, so as to transmit data and power between the electronic apparatuses.

Another objective of the present invention is to switch between path configurations of the electronic apparatuses manually by means of switching units and in accordance with the switching device, so as to transmit data and power between the electronic apparatuses.

Yet another objective of the present invention is to provide a switching device equipped with an expansion unit connected to the electronic apparatuses so as to transmit data and power between the expansion unit and the electronic apparatuses.

A further objective of the present invention is to provide a switching device equipped with and coupled to a battery unit for storing the power derived from the electronic apparatuses or supplied by utility electricity or supplying the power to the electronic apparatuses.

In order to achieve the above and other objectives, the present invention provides a switching device for use in transmitting at least one of data and power between electronic apparatuses when connected thereto. The switching device comprises a first transmission module, a voltage dividing unit, a second transmission module, a switching module, a hub module, and an expansion unit. The first transmission module has a first power connection terminal and a first data connection terminal. The first transmission module is connected to one of the electronic apparatuses via the first power connection terminal and the first data connection terminal so as to transmit the data and the power. The voltage dividing unit is connected to the first power connection terminal. The voltage dividing unit retrieves the power from the first power connection terminal, so as to generate a trigger signal. The second transmission module has a second power connection terminal, a second data connection terminal, and a control terminal. The second transmission module is connected to the other one of the electronic apparatuses via the second power connection terminal and the second data connection terminal. The second power connection terminal is connected to the first power connection terminal. The control terminal switches between control configurations, wherein the control configurations include master control configurations and slave control configurations, depending on the electronic apparatuses connected to the second transmission module. The switching module is connected to the first data connection terminal and the second data connection terminal. The hub module has a plurality of connecting units and a routing unit. The hub module is connected to the switching module via the connecting units. The hub module and the switching module together form a plurality of path configurations whereby the data and the power are transmitted between the electronic apparatuses. The expansion unit and the hub module are connected. The expansion unit transmits the data and the power by means of the path configurations and the electronic apparatuses.

Compared with the prior art, the present invention provides a switching device for selecting automatically one of path configurations in accordance with a voltage change (such as a change resulting from the switching between a high voltage, a low voltage, and a marginal voltage) resulting from the connection of electronic apparatuses (such as portable mobile communication devices, notebook computers or chargers) having master-slave architecture to thereby select one of the path configurations, such that the electronic apparatuses can transmit data and power through the path configurations.

In another embodiment, the switching device of the present invention further comprises switching units whereby one of the path configurations can be changed manually, such that the electronic apparatuses can transmit data and power through the path configurations.

### BRIEF DESCRIPTION OF THE DRAWINGS

FIG. 1 is a schematic view of a switching device according to the first embodiment of the present invention;
FIG. 2 is a schematic view of a switching module in FIG. 1;
FIG. 3 is a schematic view of a switching device according to the second embodiment of the present invention;
FIG. 4 is a schematic view of connection of switching units in FIG. 3; and
FIG. 5 is a schematic view of a switching device according to the third embodiment of the present invention; and
FIG. 6 is a schematic view of a switching device according to the fourth embodiment of the present invention.

### DETAILED DESCRIPTION OF THE EMBODIMENTS OF THE INVENTION

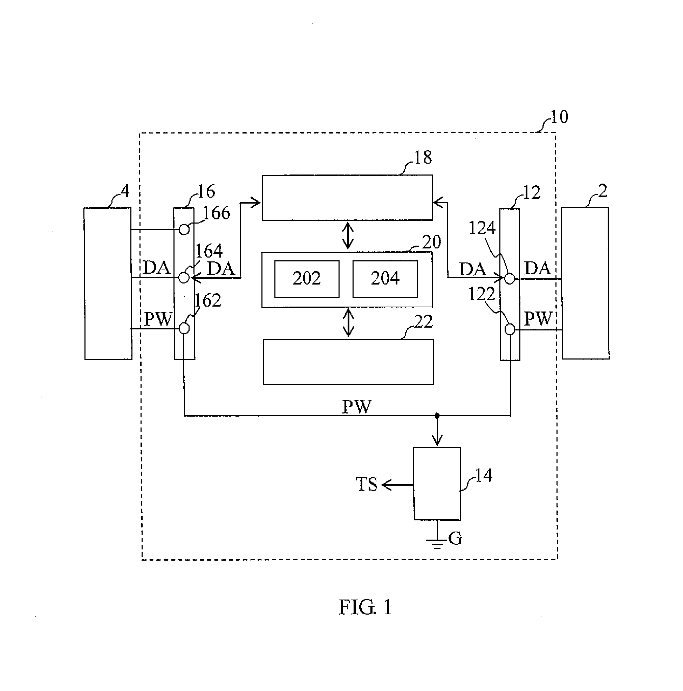

Referring to FIG. 1, there is shown a schematic view of a switching device according to the first embodiment of the present invention. As shown in FIG. 1, after being connected to a plurality of electronic apparatuses 2, 4, the switching device 10 transmits at least one of data DA and power PW between the electronic apparatuses 2, 4. The electronic apparatuses 2, 4 have a master-slave architecture. The electronic apparatuses 2, 4 come in the form of notebook computers, portable mobile communication devices, data storage devices, card readers, and chargers. In this embodiment, the electronic apparatus 2 is configured as a master. For example, the electronic apparatus 2 is exemplified by the notebook computer or the charger. The electronic apparatus 4 is configured as a slave. For example, the electronic apparatus 4 is exemplified by a portable mobile communication device. The portable mobile communication device complies with a data transmission protocol of a USB flash drive (Universal Serial Bus On The Go, USB OTG). Once the notebook computer and the portable mobile communication device are connected to the switching device 10 at the same time, the notebook computer will be automatically configured as a master, whereas the portable mobile communication device will be automatically configured as a slave. In the situation where only the portable mobile communication device is connected to the switching device 10, the portable mobile communication device will be automatically configured as a master.

The switching device 10 comprises a first transmission module 12, a voltage dividing unit 14, a second transmission module 16, a switching module 18, a hub module 20, and an expansion unit 22.

The first transmission module 12 has a first power connection terminal 122 and a first data connection terminal 124. The first transmission module 12 is connected to the electronic apparatus 2 via the first power connection terminal 122 and the first data connection terminal 124 for transmitting the power PW and transmitting the data DA, respectively. For example, the first transmission module 12 is a Universal Serial Bus (USB).

The voltage dividing unit 14 is connected to the first power connection terminal 122. The voltage dividing unit 14 retrieves the power PW from the first power connection terminal 122 so as to generate a trigger signal TS.

The second transmission module 16 has a second power connection terminal 162, a second data connection terminal 164, and a control terminal 166. The second transmission module 16 is connected to the electronic apparatus 4 via the second power connection terminal 162 and the second data connection terminal 164. The second power connection terminal 162 and the first power connection terminal 122 are connected. Furthermore, the control terminal 166 chooses between master control configuration and slave control configuration of the electronic apparatus 4 connected to the second transmission module 16. That is to say, the electronic apparatus 4 switches between the master and the slave in accordance with the voltage at the control terminal 166.

The switching module 18 is connected to the first data connection terminal 122 and the second data connection terminal 162.

The hub module 20 has a plurality of connecting units 202 and a routing unit 204. The hub module 20 is connected to the switching module 18 via the connecting units 202. The hub module 20 and the switching module 18 together form a plurality of path configurations for transmitting the data DA and the power PW between the electronic apparatuses 2, 4.

The expansion unit 22 and the hub module 20 are connected. With the path configurations, the expansion unit 22 enables the data DA and the power PW to be transmitted between the electronic apparatuses 2, 4. For instance, the expansion unit 22 is an electrical connection interface, a High-Definition Multimedia Interface (HDMI), a card reader, and/or a wireless communication circuit.

In this embodiment, the switching device 10 changes the path configurations of the switching module 18 and the hub module 20 automatically in accordance with the trigger signal TS generated as a result of the connection of the first transmission module 12 and the electronic apparatuses 2 to the voltage dividing unit 14.

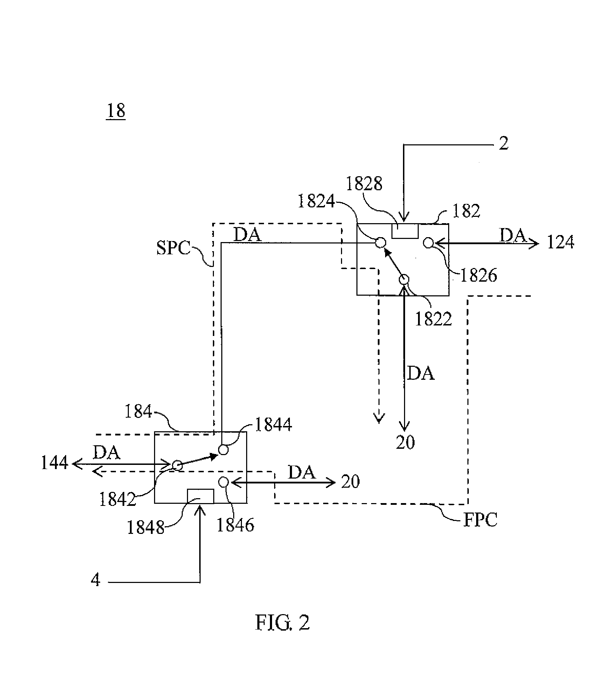

Referring to FIG. 2, there is shown a schematic view of the switching module 18 in FIG. 1. As shown in FIG. 2, the switching module 18 comprises a plurality of switching units 182, 184. In this embodiment, the switching units 182, 184 are exemplified by a first switching unit 182 and a second switching unit 184, respectively. The first switching unit 182 has a master terminal 1822, a first control terminal 1824, a second control terminal 1826, and a selection terminal 1828; and the second switching unit 184 has a master terminal 1842, a first control terminal 1844, a second control terminal 1846, and a selection terminal 1848.

In this embodiment, connection of the terminal of the first switching unit 182 and the terminal of the second switching unit 184 is as follows: the master terminal 1822 of the first switching unit 182 connects to the hub module 20; a first control terminal 1824 of the first switching unit 182 connects to a first control terminal 1844 of the second switching unit 184; a second control terminal 1826 of the first switching unit 182 connects to the first power connection terminal 122 of the first transmission module 12; the master terminal 1842 of the second switching unit 184 connects to the second power connection terminal 162 of the second transmission module 16; and the second control terminal 1846 of the second switching unit 184 connects to the hub module 20.

The switching between the first control terminal 1824 of the first switching unit 182 and the first control terminal 1844 of the second switching unit 184, coupled with the hub module 200, enables a first path configuration FPC and a second path configuration SPC to be formed in the switching device 10, as described below in detail.

A transmission path adapted to transmit the data DA and the power PW and defined by the first path configuration FPC is the transmission path adapted to transmit the data DA and the power PW through the second control terminal 1826 of the first switching unit 182, the master terminal 1822 of the first switching unit 182, the hub module 20, the second control terminal 1846 of the second switching unit 184, and the master terminal 1842 of the second switching unit 184, so as to transmit the data DA between the electronic apparatuses 2, 4.

A transmission path adapted to transmit the data DA and the power PW and defined by the second path configuration SPC is the transmission path adapted to transmit the data DA and the power PW through the first control terminal 1824 of the first switching unit 182, the master terminal 1822 of the first switching unit 182, the hub module 20, the first control terminal 1844 of the second switching unit 184, and the master terminal 1842 of the second switching unit 184, so as to transmit the data DA between the electronic apparatus 4 and the expansion unit 22.

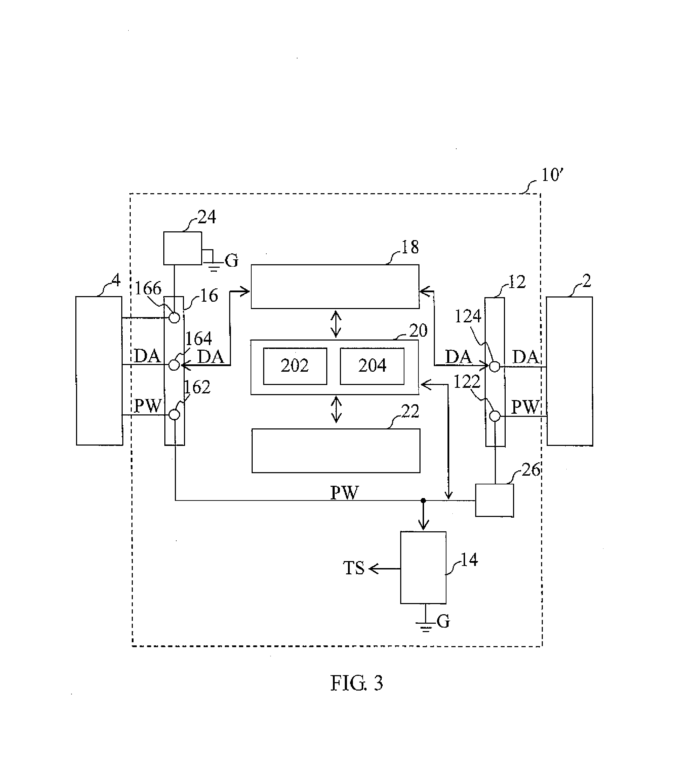

Referring to FIG. 3, there is shown a schematic view of a switching device 10' according to the second embodiment of the present invention. As shown in FIG. 3, the switching device 10' not only comprises the first transmission module 12, the voltage dividing unit 14, the second transmission module 16, the switching module 18, the hub module 20, and the expansion unit 22 of the first embodiment, but also comprises the switching units 24, 26, whereas the hub module 20 is further connected to the voltage dividing unit 14 and the second power connection terminal 142.

The switching unit 24 is connected to a ground G and the control terminal 166 of the second transmission module 16. A user presses the switching unit 24 to determine the state of electrical conduction between the control terminal 166 and the ground G. The switching unit 26 connects the first power connection terminal 122 and the second power connection terminal 142. The user presses the switching unit 26 to change the state of electrical conduction between the first power connection terminal 122 and the second power connection terminal 142.

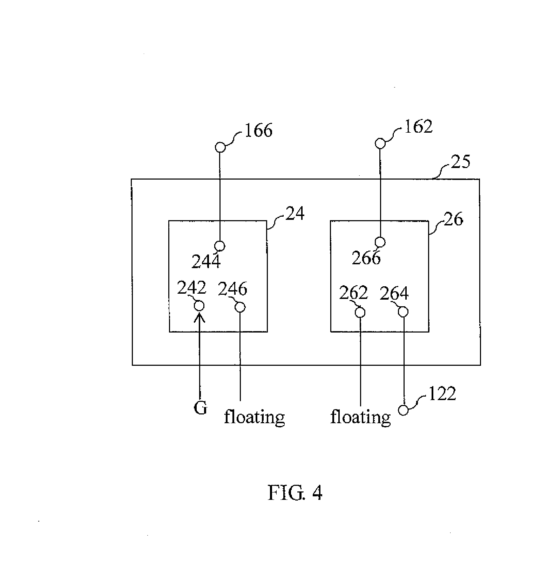

Referring to FIG. 4, there is shown a schematic view of the connection of the switching units 24, 26 in FIG. 3. As shown in FIG. 4, the switching units 24, 26 together form a switcher 25 having six switching terminals. The switching unit 24 has a first switching terminal 242, a second switching terminal 244, and a third switching terminal 246. The first switching terminal 242 is connected to the ground G. The second switching terminal 244 is connected to the control terminal 166. The third switching terminal 246 is floating. The switching unit 26 has a fourth switching terminal 262, a fifth switching terminal 264, and a sixth switching terminal 266. The fourth switching terminal 262 is floating. The fifth switching terminal 264 is connected to the first power connection terminal 122. The sixth switching terminal 266 is connected to the second power connection terminal 142.

In this embodiment, by switching between the switching units 24, 26, the switching device 10' enables users to change the path configurations of the switching module 18 and the hub module 20 manually.

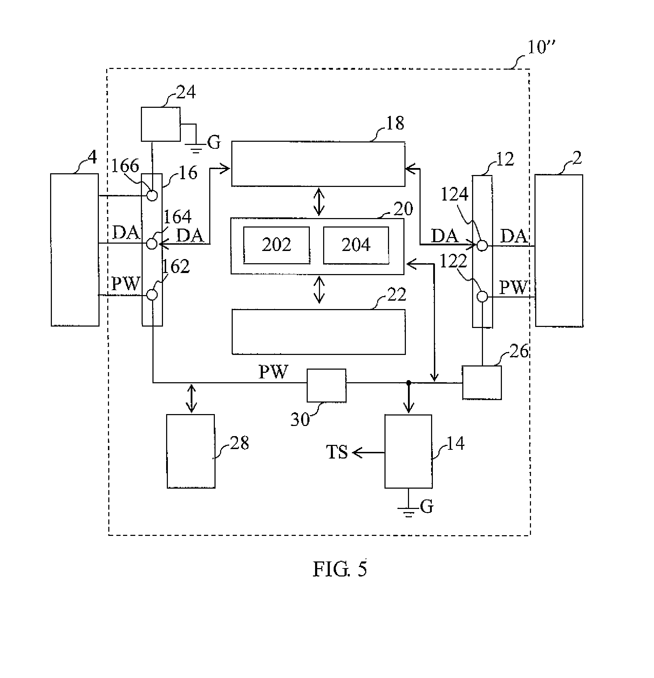

Referring to FIG. 5, there is shown a schematic view of a switching device 10" according to the third embodiment of the present invention. As shown in FIG. 5, the switching device 10" not only comprises the first transmission module 12, the voltage dividing unit 14, the second transmission module 16, the switching module 18, the hub module 20, the expansion unit 22, and the switching units 24, 26 of the second embodiment, but also comprises a battery unit 28 and a Shockley diode 30.

The battery unit 28 is connected to the first power connection terminal 122 and the second power connection terminal 142. The battery unit 28 stores the power PW that originates from the electronic apparatuses 2, 4. Alternatively, the battery unit 28 supplies the power PW to the electronic apparatuses 2, 4.

The Shockley diode 30 has two ends, one of which is connected to the first power connection terminal 122, and the other end is connected to the second power connection terminal 142.

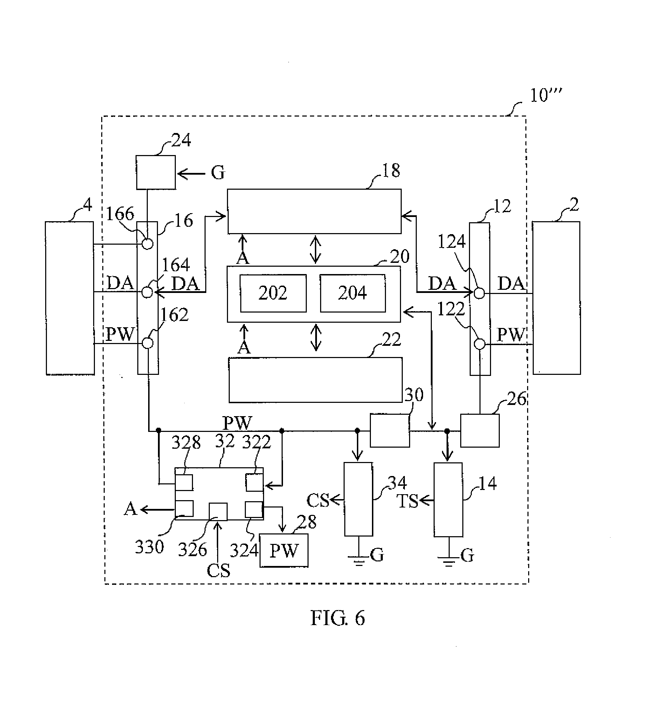

Referring to FIG. 6, there is shown a schematic view of a switching device 10"' according to the fourth embodiment of the present invention. As shown in FIG. 6, the switching device 10"' not only comprises the first transmission module 12, the voltage dividing unit 14, the second transmission module 16, the switching module 18, the hub module 20, the expansion unit 22, the switching units 24, 26, the battery unit 28, and the Shockley diode 30 which are disclosed in the third embodiment, but also comprises a power control unit 32 and a sampling resistor 34.

The power control unit 32 connects the Shockley diode 30 and the second power connection terminal 162. The power control unit 32 has a plurality of power input terminals 322, 324, a power control terminal 326, and a plurality of power output terminals 328, 330.

The power input terminal 322 is connected to one end of the Shockley diode 30. The power input terminal 324 is connected to the battery unit 28. The power control terminal 326 selects and sends one of the power PW transmitted from one end of the Shockley diode 30 and the power PW stored in the battery unit 28 to the power output terminals. The power output terminal 328 is connected to the second power connection terminal 162. The power output terminal 330 supplies the power PW to the switching module 18 and the hub module 20, and its circuit is denoted with A.

The sampling resistor 34 has two ends, one of which is connected to the Shockley diode 30 and the second power connection terminal 162, the other end is connected to the ground G. Depending on the connection of the first transmission module 12 and the electronic apparatuses 2, a control signal CS is generated and sent from the sampling resistor 34 to the power control terminal 326 and adapted to enable the power control unit 32 to select either the power PW sent from one end of the Shockley diode 30 or the power PW stored in the battery unit 28.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A switching device for use in transmitting at least one of data and power between electronic apparatuses when connected thereto, the switching device comprising:
a first transmission module having a first power connection terminal and a first data connection terminal and connecting to one of the electronic apparatuses via the first power connection terminal and the first data connection terminal to thereby transmit the data and the power;
a voltage dividing unit connecting to the first power connection terminal and retrieving the power from the first power connection terminal to thereby generate a trigger signal;
a second transmission module having a second power connection terminal, a second data connection terminal, and a control terminal and connecting to another one of the electronic apparatuses via the second power connection terminal and the second data connection terminal, wherein the second power connection terminal connects to the first power connection terminal, wherein the control terminal switches between a master control configuration and a slave control configuration of the electronic apparatuses connected to the second transmission module;
a switching module connected to the first data connection terminal and the second data connection terminal;
a hub module having a plurality of connecting units and a routing unit and connecting to the switching module via the connecting units, wherein the hub module and the switching module together form a plurality of path configurations whereby the data and the power are transmitted between the electronic apparatuses; and
an expansion unit connected to the hub module, wherein the data and the power are transmitted between the expansion unit and the electronic apparatuses in accordance with the path configurations.

2. The switching device of claim 1, wherein the path configurations between the switching module and the hub module are automatically changed in accordance with the trigger signal generated as a result of connection of the first transmission module and the electronic apparatuses to the voltage dividing unit.

3. The switching device of claim 1, further comprising a plurality of switching units one of which is connected to a ground and the control terminal of the second transmission module, wherein a user presses one of the switching units to determine a state of electrical conduction between the control terminal and the ground, wherein another one of the switching units is connected to the first power connection terminal and the second power connection terminal and pressed by the user to change the state of electrical conduction between the first power connection terminal and the second power connection terminal.

4. The switching device of claim 3, wherein one of the switching units has a first switching terminal, a second switching terminal, and a third switching terminal, the first switching terminal connecting to the ground, the second switching terminal connecting to the control terminal, and the third switching terminal floating.

5. The switching device of claim 4, wherein another one of the switching units has a fourth switching terminal, a fifth switching terminal, and a sixth switching terminal, the fourth switching terminal floating, the fifth switching terminal connecting to the second power connection terminal, and the sixth switching terminal connecting to the first power connection terminal.

6. The switching device of claim 5, wherein the hub module is further connected to the voltage dividing unit and the second power connection terminal.

7. The switching device of claim 1, wherein the switching module further comprises a plurality of switching units each having a master terminal, a first control terminal, a second control terminal, and a selection terminal, the selection terminal being connected to the voltage dividing unit, and the switching units each determining a state of connection between the master terminal, the first control terminal, and the second control terminal in accordance with a voltage level of the trigger signal received at the selection terminal.

8. The switching device of claim 7, wherein the switching units are provided in form of a first switching unit and a second switching unit, wherein the master terminal of the first switching unit is connected to the hub module, wherein the first control terminal of the first switching unit and the first control terminal of the second switching unit are connected, wherein a second control terminal of the first switching unit is connected to one of the transmission units, wherein the master terminal of the second switching unit is connected to another one of the transmission units, wherein the second control terminal of the second switching unit is connected to the hub module.

9. The switching device of claim 8, wherein a transmission path is defined by a first path configuration and adapted to transmit the data and the power through the second control terminal of the first switching unit, the master terminal of the first switching unit, the hub module, the second control terminal of the second switching unit, and the master terminal of the second switching unit.

10. The switching device of claim 8, wherein a transmission path is defined by a second path configuration and adapted to transmit the data and the power through the first control terminal of the first switching unit, the master terminal of the first switching unit, the hub module, the first control terminal of the second switching unit, and the master terminal of the second switching unit.

11. The switching device of claim 1, wherein the expansion unit is at least one of an electrical connection interface, a High-Definition Multimedia Interface (HDMI), a card reader, and a wireless communication circuit.

12. The switching device of claim 1, further comprising a battery unit connected to the first power connection terminal and the second power connection terminal and adapted to store the power originating from the electronic apparatuses or supply the power to the electronic apparatuses.

13. The switching device of claim 12, further comprising a Shockley diode having two ends, one connected to the first power connection terminal, and the other connected to the second power connection terminal.

14. The switching device of claim 13, further comprising a power control unit connecting to the Shockley diode and the second power connection terminal and having a plurality of power input terminals, a power control terminal, and a plurality of power output terminals, wherein one of the power input terminals is connected to an end of the Shockley diode, and another one of the power input terminals is connected to the battery unit, wherein the power control terminal selects one of the power transmitted from an end of the Shockley diode and the power stored in the battery unit and sends the selected power to the power output terminals, wherein one of the power output terminals is connected to the second power connection terminal, and another one of the power output terminals supplies the power to the switching module and the hub module.

15. The switching device of claim 14, further comprising a sampling resistor having two ends, one connected to the Shockley diode and the second power connection terminal, another grounded, to thereby generate a control signal in accordance with connection between the first transmission module and the electronic apparatuses, wherein the control signal is sent to the power control terminal and adapted to enable the power control unit to select one of the power transmitted from an end of the Shockley diode and the power stored in the battery unit.

16. The switching device of claim 1, wherein the first transmission module and the second transmission module are universal serial buses, wherein the hub module is a universal serial bus hub.
